# EUROPEAN PATENT APPLICATION

(11) **EP 4 811 216 A1**
(43) Date of publication of application: **23.09.2026**
(21) Application number: 25165434.9
(22) Date of filing: 21.03.2025
(51) Int. Cl.: G06N 3/0455, G06F 21/60, G06N 20/00, H04L 9/40

(54) **REAL-TIME ML MODEL UPDATING**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A real-time machine learning (ML) model updating method is described, which comprises monitoring input data to a deployed ML model, detecting drift of the input data over time, identifying new patterns in the input data, and responsive to detected drift, retraining the ML model using the identified new patterns. In some implementations, the ML model is deployed in a cyber-threat detection application operating on a computer network, wherein the input data comprises network metadata, and wherein the new patterns are indicative of new network threats. In this way, a need for real-time monitoring of ML models for detecting the changes in the behaviour of known threats and exposing the ML models to the newly identified traits of the threat can be provided to achieve a reliable threat detection system.

## Description

### Field of the Invention

The present invention relates to a method and a system for real-time updating of an ML (machine learning) model. In particular, it relates to a method and system in which an ML model, used for example in a network cyber-security threat detection application, is updated to handle new threats.

### Background to the Invention

In cyber security applications, the data is very diverse and the environment is very dynamic. A large computer network provider may log millions of events per second over its network for the purpose of identifying and mitigating cyber defence. Even for a modest sized corporate network, or a much smaller home network, more data is generated than can be reasonably interpreted and analysed by a human. Consequently, machine learning has been replacing significant tasks in the domain to secure devices and networks from evolving threats, and automated detection through machine learning has become a standard cyber security practice.

Machine learning models are usually tested for their performance before deployment and depending on the deployment environment, the model deteriorates over time quickly or gradually. Furthermore, ML models may be susceptible to exploitation of vulnerabilities that may not be known at the point of development or deployment. As a result, it will be appreciated that ML-powered cyber threat detection models can be expected to become ineffective over time as the known threats constantly evolve to fool the security systems. As such, they can compromise the device/networks if they go undetected.

Similar challenges may occur in other applications. For example, machine learning is also deployed in applications such as network monitoring (performance rather than cyber), resource management, customer service (e.g. chatbots), search and recommendations and more.

### Summary of the invention

In a first aspect of the present invention, there is provided a real-time machine learning (ML) model updating method, comprising:
monitoring input data to a deployed ML model;
detecting drift of the input data over time;
identifying new patterns in the input data; and
responsive to detected drift, retraining the ML model using the identified new patterns.

In some implementations, the ML model is deployed in a cyber-threat detection application operating on a computer network, wherein the input data comprises network metadata, and wherein the new patterns are indicative of new network threats. In this way, a need for real-time monitoring of ML models for detecting the changes in the behaviour of known threats and exposing the ML models to the newly identified traits of the threat can be provided to achieve a reliable threat detection system.

The drift may be detected and/or the new patterns may be identified using an autoencoder in combination with a critic network.

The step of identifying new patterns in the input data may comprise determining a reconstruction error metric for newly received input data using the autoencoder and critic network.

The autoencoder and the critic network may be trained in parallel on the same input data, with respective different training goals of minimising a difference between input data and reconstructed output data of the autoencoder, and optimising the critic network for distinguishing between input data and reconstructed output data.

The autoencoder and the critic network may be trained exclusively on target threat data.

By employing a critic-based autoencoder to detect model decay by identifying changes in the behaviour of threat-specific signatures based on multivariate time-based data drift detection, the real-time model monitoring method is able to better distinguish new patterns in the input data from the original patterns used to train the ML model. This is because the critic network causes the autoencoder to be more trained to be more tightly bound to modelling the original patterns.

The method may comprise monitoring the performance of the ML model on the input data, and correlating a deterioration in performance of the ML model to the detected drift and/or new patterns in the input data.

The retraining may be triggered when an amount and/or rate of detected drift exceeds one or more thresholds. The thresholds may comprise one or more of a rate of change in the performance of the model, changes in the signatures of known threats, and a ratio of newly observed drift data to expected data.

The method may use a generative artificial intelligence (AI) algorithm to produce synthetic data from the identified new data patterns, wherein the ML model is retrained using both the identified new data patterns and the synthetic data. The generative Al algorithm may be a conditional algorithm which generates the synthetic data in dependence on specified input conditions.

The new threat detected may not have sufficient samples of data to initiate the re-training of the ML models. Therefore, Generative-Al-based automated sample data generation may be applied to generate a diverse and high quantity of data to support the ML model re-training process. It will be understood that these generated samples may be used alongside previously observed and understood data.

The retraining may be a partial retraining using the identified new data and previous learnings of the ML model.

The method may comprise validating the retrained model using synthetic data produced from the identified new patterns.

In a second aspect of the present invention, there is provided a real-time ML model updating system, comprising:
a drift detector, for monitoring input data to a deployed ML model and detecting drift of the input data over time, and for identifying new patterns in the input data; and
a retrainer, responsive to detected drift to retrain the ML model using the identified new patterns.

By integrating with a Machine Learning Operations (MLOps) pipeline, the system can inject test data allowing for real-time evaluation of model performance. This can give continuous confidence in model operation.

With the features set out above, the overall capability of the system may include:
- Real-time monitoring of the deployed ML-based models.
- Data drift detection
- Triggering automated multi-variate time-based incremental ML model training based on data drift threshold rates.
- Generative-Al based synthetic sample data generation to support accelerated ML model retraining and schedulable stress testing of security systems.
- Testing ML models before deployment
- Continuous ML model verification & validation to keep the model up to date

Whilst cyber threat detection is used as an example of a practical application of the present technique, it could be utilised in the context of a variety of ML operations.

In a third aspect of the present invention, there is provided a computer system comprising a processor and a memory storing computer program code for performing a method according to the first aspect.

In a fourth aspect of the present invention, there is provided a computer program comprising instructions which, when executed by a computer, cause the computer to carry out a method according to the first aspect.

While embodiments are described herein with reference to cyber security and threat detection, the present techniques are applicable to other applications in which the "environment" being modelled by a ML model changes over time. This may be a natural change, gradually eroding the effectiveness of the model, or intentional changes, as is generally the case with cyber-security. Examples of other applications include batch image processing and the control of self-driving vehicles.

### Brief Description of the Figures

Embodiments of the present invention will now be described by way of example only, with reference to the accompanying drawings, in which:
Figure 1 is a block diagram of a computer system suitable for the operation of embodiments of the present invention.
Figure 2 is a diagrammatic illustration of a system according to an embodiment of the present invention.
Figure 3 is a schematic illustration of a multi-layer structure for an embodiment of the present invention.
Figure 4 is a block diagram representation of the system, showing the signal flow for threat detection, drift detection, and re-training.
Figures 5A and 5B graphically indicate an inversely proportional relationship between reconstruction error and model performance.
Figure 6 schematically illustrates example reconstruction errors for original and new patterns in input data.

### Detailed Description of Embodiments

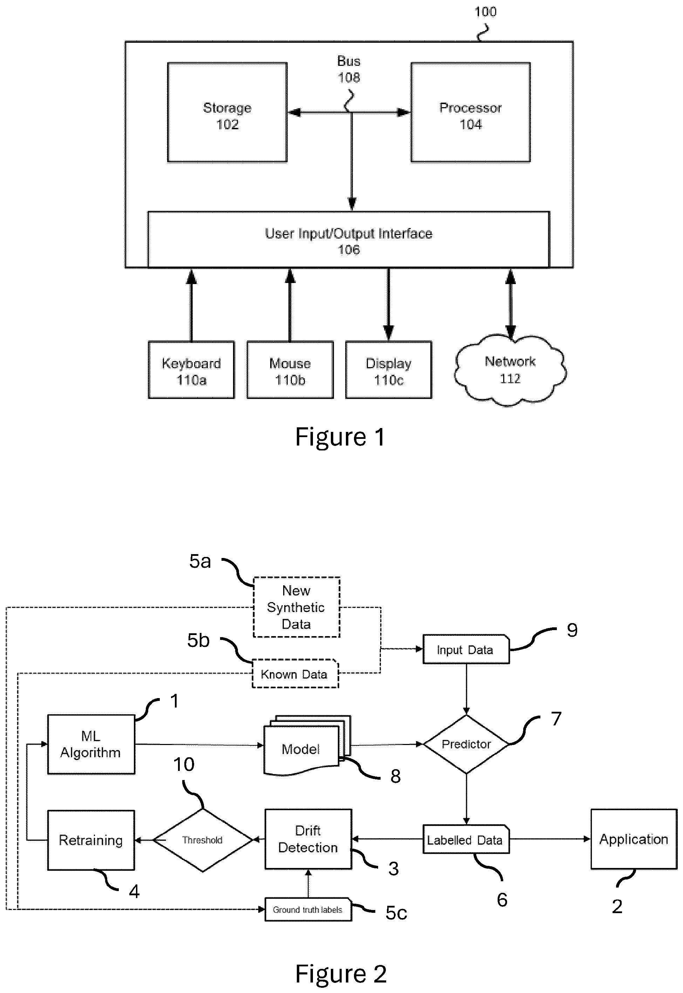

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random-access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 110c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

Machine Learning Operations (MLOps) is the term given to engineering practices to productionise and maintain machine learning capabilities. Specifics of the MLOps cycle vary, but generally incorporate the following stages: Exploratory Data Analysis (EDA), Data Prep, Development, Retraining, Review, Deployment, Inference and monitoring. A key challenge considered with the present technique is how the tasks of monitoring, retraining and reviewing can be conducted in an automated manner, to ensure thoroughness, adaptation to changes in subject data and robustness to attempts to exploit ML models.

There are a number of open-source tools available to assist with testing and evaluating ML algorithms, such as:
- Trubrics (GitHub - trubrics/trubrics-sdk:) The first user analytics platform for Al models) which relies on human analysts to provide feedback on model performance.
- Bailo (GitHub - gchq/Bailo:) Managing the lifecycle of machine learning to support scalability, impact, collaboration, compliance and sharing, developed by GCHQ to facilitate ML lifecycle management, in particular compliance and impact.
- Seldon (https://github.com/SeldonlO/alibi-detect) is a tool for outlier and drift detection.

However, these existing tools lack the ability to retrain and adjust a model in response to changes within the operating environment.

The present technique utilises drift detection to identify when the input data has changed to the extent where re-training is necessary. Drift detection per se has been considered in previous studies, such as "Mitigating ML Model Decay in Continuous Integration with Data Drift Detection: An Empirical Study", in this case using existing statistical methods for detecting data drift, to identify the optimal retraining point of ML models. This paper primarily focuses on employing Hellinger distance for detecting changes in input data and uses APFDc and NAPFD metrics for evaluating the retrained models. The paper "An overview of unsupervised drift detection methods" discusses various unsupervised and semi-supervised drift detectors. In "Understanding Reconstruction Error with PCA - NannyML- Python module", the open-source python module NannyML is explained to use PCA based reconstruction error method to detect data drift.

In contrast to these techniques, and as will be explained in detail below, the present technique utilises a critic-powered Deep neural network autoencoder for generating reconstruction error which is used to define the drift rate of a known threat class. Further, different evaluation metrics may be used to evaluate the incrementally retrained cyber threat detection ML Models.

As well as data drift occurring from the nature of data being examined changing (in the cyber context, this would be a result of the change of tactics by attackers), ML models may become ineffective because of exploitation by adversarial actors. Adversarial machine learning are attacks against ML and may involve subverting classification by obfuscating input, masquerading malicious data as benign at the training stage, or working to evade (or maximise) a model's specificity.

Whilst some tooling exists to achieve partial goals of testing machine learning, the present technique seeks to provide a new mechanism of automated and continuous testing and refinement.

Referring to Figure 2, a high-level process overview is provided. The process comprises an application 2 which in principle could be anything that relies on ML predictions as an output. In the present case, the application 2 provides detection of malicious cyber activity in network telemetry. The application 2 relies on labelled data 6 (that is, labelled with an indication of a threat/no threat, or an indication of a specific cyber threat), based on which it is able to act (for example by initiating steps to block or eradicate the threat). The labels are based on ground truth labels, which represent real world values (classifications) which the model aims to predict from the data, and which may be manually established or otherwise derived from trusted sources (that is, threat intelligence). The labelled data 6 is generated by a predictor 7, which applies a model 8 to input data 9 being received or monitored at the system. Optionally, new synthetic data 5a may be generated for use in testing the deployed model 8, alongside actual known data 5b. In particular, the synthetic data 5a is injected into the application's data under test, that is, alongside the known data 5b, forming the input data 9. Doing this allows the drift detection stage (described below) to be more effective as it knows what labels are expected. The deployed model 8 is based on an ML algorithm 1, which has been previously trained on suitable input data (including cyber threats). The ML algorithm 1 may be any form of machine learning that incorporates a training stage, feedback or critic stage such as decision trees, support vector machines, neural networks or autoencoders. It will be understood that the elements 1, 2 and 6 to 9 each play a direct role in threat detection. Also included is a drift detector 3, which receives the labelled data 6 (in parallel with it being provided to the application 2). The drift detection module is described in detail below. Based on the output of the drift detection module 3, a retraining stage 4 may be used. The retraining stage is described in further detail below. This involves the incorporation of the new data 5b (in this implementation known threat network telemetry) and Generative-Al-based algorithms such as CT-GAN (Conditional Generative Adversarial Network) produced synthetic data 5a. The retraining module 4 may be utilised in some embodiments only when an amount of drift detected by the drift detection module 3 exceeds a threshold 10. The drift detection module 3 utilises ground truth labels 5c which are based on the new synthetic data 5a and the known data 5b.

Considering the test data 5a, 5b in more detail, the aim of the new synthetic data is to represent emerging or hypothetical trends in data (for example changing behaviours of malicious actors) that can be used to train & test ML algorithms, in order to update the existing ML model. The test data 5a may be generated by a test data generator using CT-GAN-based data generation to generate samples of test data to test the ML models. The CT-GAN could also be used to replay known attacks and could also implement adversarial attacks for Al vulnerability stress testing and security tools stress testing. Where new test data 5a is generated and injected (along with "real" data 5b) to both the drift detector 3 and the live model 8, this may serve both to detect vulnerabilities to the new test data in the model (or in the alternative to confirm its robustness to the new test data), and also to accelerate the detection of drift.

In the following description a use case is provided for the cyber security domain. However, the system may apply to the application of machine learning in a variety of contexts.

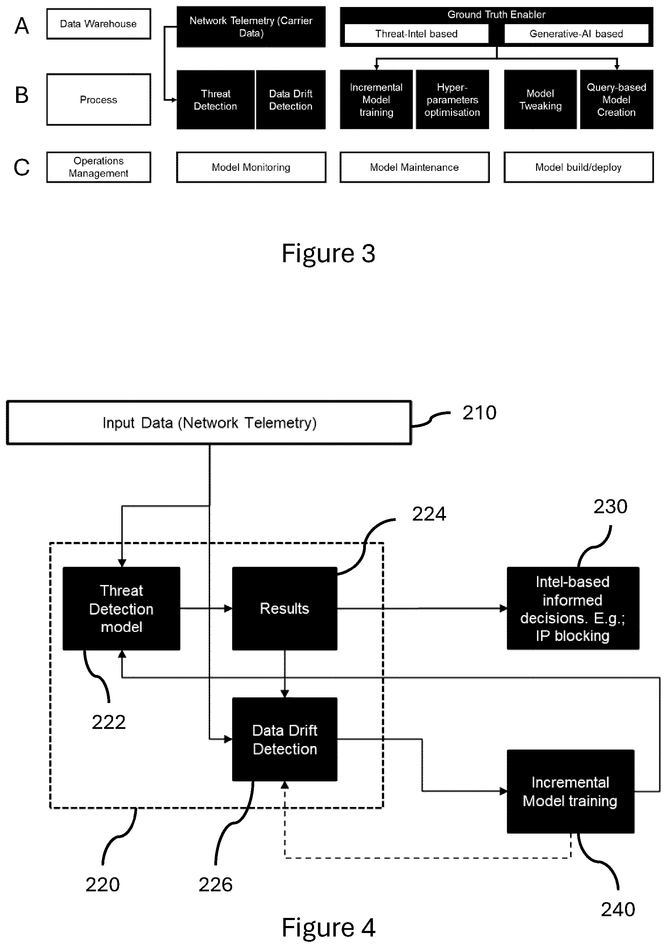

Referring to Figure 3, the system comprises three layers containing multiple sub-systems. A data warehouse layer A consists of core network telemetry which produces the network metadata for all traffic observed on the core network. The network metadata such as DNS logs and NetFlow data etc., contain rich predictors to determine the type of network traffic (e.g. Benign, malicious, anomalous). Therefore, the ML models trained on the network metadata are highly efficient in detecting network threats and anomalies. The data warehouse layer A also comprises a ground truth enabler component, which takes the form of a data engineering pipeline that combines network telemetry data and threat intelligence to produce ground truth data (labelled data). The ground truth enabler generates both benign and threat-specific network metadata for ML model development.

The other two layers are a process layer B, which sits beneath the data warehouse layer A, and an operations management layer C, which sits beneath the process layer B. The process layer B and operations management layer C co-relate with each other, making use of the underlying data provided by the data warehouse layer A. The higher-level operations in the operations management layer C such as ML model monitoring, model maintenance and model build/deploy have associated sub-processes such as threat detection (in the process layer B and associated with the model monitoring operation), drift detection (again, in the process layer B and associated with the model monitoring operation), incremental model training (in the process layer B and associated with the model maintenance operation), and model tweaking (in the process layer B and associated with the model build/deploy operation) etc. Depending on the process required, the user is able to select the respective operations management interface to execute the processes.
- **Model Monitoring:** The model monitoring part is an interface where the deployed ML model performs scheduled tasks; typically, live network metadata is fed into the ML Model to detect and identify threats and anomalies on a network. This interface enables the real-time model monitoring of the model performance and detection of any potential model decay due to data drift. The data drift module identifies changes in the behaviour of threat-specific signatures based on multivariate time-based data drift detection.
- **Model Maintenance:** The operations in model evaluation include ML model retraining and post-building ML Model testing and optimisation process. The post-deployment incremental model retraining ensures the model is fitted with the latest data keeping it efficient and updated with the changing environment. The optimisation tasks such as hyper-parameters tuning, version management, model security, and privacy can be experimented with using the interface.
- **Model Build/Deploy:** Model maintenance is primarily to modify the ML model architecture and replace//customise the ML algorithm and to modify the targets of the ML Model (To add, amend, and modify the target of interest). One of the features of this element is the low code/no code query-based new model creation, which will allow the users to create an ML threat detection model by just specifying the target name; for example, DDoS or APT malware, etc.

Referring to Figure 4, a module and process for the drift detection 3 and model training 4 is shown. In Figure 4, input data (network telemetry) 210 is provided to a threat and drift detection system 220. The system 220 comprises a threat detection model 222, which receives the input data 210 and applies a ML model to it to generated results 224. The results 224 are then used by a decision process 230 to make intel-based informed decisions, such as IP blocking, to protect devices and/or the network from a threat detected in the input data 210. The system 220 also comprises a data drift detector 226, which operates in parallel with the threat detection model 222, and on the same input data 210. It also receives the results 224, enabling it to assess the predictive performance of the underlying ML model. Based on these inputs, the drift detector 226 identifies deterioration in the ML model, and identifies associated new patterns in the input data (that is, patterns which are correlated with the deterioration in model performance). Once the detected drift exceeds a specified level, incremental model (re)training 240 is carried out, to form an updated version of the threat detection model 222. As part of the retraining process, the retrained model may be subject to model testing and evaluation, before being deployed to replace the previously deployed version of the model. Alternatively, the testing and evaluation may be carried out while the new model is deployed (with the updated model being tweaked or rolled back, if necessary, in view of the testing).

In an example scenario, an ML model is deployed on a server to monitor threats and anomalies on a network. The ML model is deployed upon testing and running various experiments, and usually the model performs as expected for a certain period depending on the severity of dynamicity in the operational environment. The model starts to deteriorate over time and if the ML model is unmonitored, the model decay over time will go unnoticed. The consequences of a decaying ML model-based security system may be catastrophic since emerging threats and new variants of known threats may easily bypass the security systems. The ML model's performance and the changes in the operational environment, i.e. the data drift in the core network telemetry should be detected as early as possible. The present technique provides an automated real-time ML model monitoring and evaluation system, capable of detecting model decay and changes in the behaviour/signatures of target threats.

From Figure 4, it will be appreciated firstly that the deployed ML model 222 capable of detecting threats (e.g., DDoS, Ransomware etc.) and anomalies on a network, is inputted with the network telemetry metadata 210. The model 222 performs inference, and the results are used to make informed decisions 230. During this process, in parallel the model's predictive performance and data drift are monitored 226. If the model's performance deteriorates, the correlation to the changes in the data is also measured using the drift detector module 226. Predefined threshold limits (such as the threshold 10 referenced in Figure 2) and volume limits are used to trigger incremental retraining 240 of the model. The threshold limits are defined by the rate of change in the model's performance (with respect to time) and the changes to the signatures of known threats, also known as drift rate. The volume limits refer to a ratio of newly observed(drift) data to the expected data, this is a minimum value beyond which re-training will be used to trigger retraining alongside the threshold metric measurements. That is, multiple different thresholds relating to characteristics of an amount or rate of change of the nature of the input data may be used to trigger retraining.

The retraining of the ML model requires more samples for newly detected threat types. Usually, the size of detected emerging threat samples is too small to be utilised effectively for ML model retraining. Therefore, generative-Al-based algorithms such as CT-GANs are proposed to be used to generate sufficient volumes of newly observed threat data. The Generative Adversarial Network (GAN) model has been prevalent in image generation applications to generate synthetic data, and the present application recognises its applicability to synthesise new data samples for use in retraining of an ML model for threat detection. In a typical GAN model, there will be a generator and discriminator component.

**Generator:** This network generates new data instances. It starts with random noise as input and learns to produce data that resembles the training set.

**Discriminator:** This network acts as a classifier, distinguishing between real data from the training set and fake data generated by the generator.

The generator's goal is to produce data that can fool the discriminator, while the discriminator aims to accurately classify real and fake data. This creates a competitive process, driving both networks to improve over time.

In the case of cyber security applications, it is assumed that the GAN model has been trained on DDoS-type (distributed denial of service) threats and ransomware-type threats. When noise is inputted, the generator is expected to generate one of the two samples. The problem conventionally is that there is no control over what types of samples are generated. However, by using a conditional GAN model, which enables the user to input conditions alongside the noise, it is possible for the trained CT-GAN to generate samples of data based on the accompanying conditions. In this case, the conditions which may be entered by the user may be characteristic of malicious data.

The complete re-training of the ML model may not be necessary, and it is computationally expensive, so depending on the ML model deterioration rates and drift rate, incremental retraining is triggered, where the previously learnt information (used to generate the currently deployed model) is leveraged in addition to the new behavioural data (newly identified signatures from the input data), this will enable the ML model to learn and detect the threats with both new and previously known signatures. Once the model is retrained, it is tested and evaluated before deploying the latest version of the model. Thus, the system will ensure that ML models in production are consistently adapting to the changes in the operational environment as early as possible and in an automated method.

The effectiveness in detecting the data drift relies on the data drift detection module 226. The data drift detection is performed using a critic-based adversarial autoencoder model. The autoencoder involves the use of 3 deep neural networks - Encoder, Decoder and Critic. The Encoder is a 4-layer deep convolutional autoencoder that "encodes" the input data by learning latent features at each layer to output an encoding of the original data. This encoding captures a rich summary of the data and is used to reproduce the original data by the Decoder. The Decoder has an architecture like the encoder network but uses transpose-convolutions to expand the encoding in each step to accurately reproduce the original data.

These two networks (encoder and decoder) are trained in tandem on solely target threat traffic flows to minimise the reconstruction error, which is the difference between the original and reconstructed data. This ensures that the network only learns to reconstruct the target threat traffic, thus ensuring that the reconstruction error for anomalous/new behaviours/variant threat flows will be high and can be used to distinguish between known target threat variants and new variants. The first objective ( 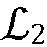 ) is the reconstruction error between the reconstructed (x̅) and original data (x). The 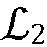 loss can be expressed as: ${L}_{2} \left(x, \overline{x}\right) = {\sum }_{i = 0}^{F} {\left({x}_{i}-{\overline{x}}_{i}\right)}^{2}$

The summation parameter has upper and lower bounds, and the upper bound 'F' indicates the number of data points in the dataset.

A problem in autoencoder-based networks is generalisation; the network can be generic enough to be able to reconstruct anomalous data to sufficient quality, despite being trained solely on a specific variant of a threat data thus reducing the ability of the algorithm to distinguish between anomalous/new behaviour/ new signatures and known variant of the target threat. Adversarial regularisation-based training using the Critic network in the proposed system addresses this issue. The Critic network has a similar architecture to the encoder network with a difference in the output layer to output a single value as a score (instead of an encoding). It is trained to discriminate between reconstructed and original data by outputting high scores for original data and low for reconstructed data. The objective for this network is thus to maximize the difference between the scores it gives to original and reconstructed data. This strategy of training is called adversarial regularisation owing to the Encoder-Decoder and Critic network being trained with opposing objectives. This ensures that the trained network is more tightly bound to the data it is trained on (a known variant of a target threat in this case) and reduces the generic nature of the network thereby addressing the generalization problem.

The output of the Critic network (defined as being between 0 and 1) is primarily used to optimise and tightly bind the autoencoder to only learn the distribution of the given target. The Critic network indirectly helps the autoencoder model during the training process. But it is the reconstruction error, (which measures the difference between original and reconstruction data) which is tied to the drift detection equation.

Based on the ML model performance, the filtered results of low confidence or anomalous predictions will be sent to the autoencoder model trained on the known variant of the threat. Since the observed traffic deviates from the known variant of the threat (based on ML predictions), the autoencoder will be able to detect and validate any new behaviours/new variants by reconstructing the anomalous flow (potentially new variant). Since the reconstruction error for the known signature of a threat should be less (within predefined thresholds), the reconstruction of new signatures/behaviours of the threat will be significantly higher. Therefore, comparing the reconstruction score of the known behaviour/signature of threat to newly observed behaviour/variant will detect and identify the evolution of the known threat.

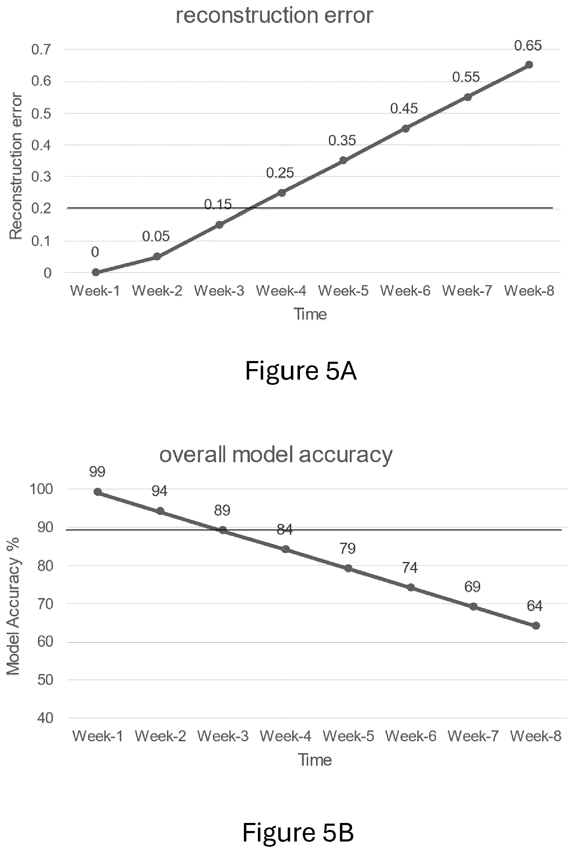

Figure 5A and 5B illustrate the inversely proportional relationship between the reconstruction error values (of known signature flows & new behaviour/signature flows) as shown in Figure 5A, and the **ML** model accuracy, as shown in Figure 5B. The baseline on the graphs is a threshold beyond which the incremental re-training will be initiated. Also introduced is a parameter referred to as "drift rate", which defines the rate of change of signature of known target threat. The drift rate uses the reconstruction error, change in the multivariate behaviour of the target over time and the effect in model performance (accuracy) to produce a value between 0 and 1, where 1 represents the maximum drift rate value. The re-training of the ML model can also be initiated using the drift rate. $f \left({d}_{r}\right) = \left({L}_{2}+Δ{T}_{S}+{A}_{D}\right) \leq 1$

The drift rate uses the reconstruction error ( 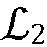 ), change in the multivariate behaviour of the target over time (Δ*T_{S}*) and the effect in model accuracy *(A_{D}).*

It will be appreciated that the drift rate equation (equation 2) is an additive combination of three metrics: (a) reconstruction error, (b) change in multivariate behaviour of the target over time, and (c) effect in model accuracy. The drift rate is bounded between 0 and 1. These three metrics may be equally weighted, or alternatively more weight could be given to one (or two) than the other(s). For example, they can be custom-weighted based on the operational requirements/application requirements, in any circumstances where custom weightings may have some advantages.

The change in multivariate behaviour of the target over time is the delta of the parameters of each observation. The target in this case is a type of cyber threat, for example "Ransomware". The data distribution of the ransomware threat detected today could be different to the new versions of the ransomware threat detected in the future. The individual measurable variables/parameters of the network data used to detect ransomware threats could change their values, affecting the overall data distribution. Since there is more than one parameter that is typically used to monitor the threat (Target), the problem becomes a multivariate analysis. The combination of changes in the individual parameters is measured using the reconstruction error output of the Autoencoder. When the Autoencoder model receives a new data distribution that is different to what the model was trained on, the reconstruction error will be high indicating changes in the data distribution of the threat due to multivariate observable changes in the target threat.

Additionally, an understanding of benign traffic behaviour is also beneficial in eliminating false positives and focusing on non-benign anomalies, making the overall system more efficient. The same principles as described above can be applied to model the benign traffic, where the autoencoder only learns to reconstruct the benign traffic and therefore any drift in normal traffic behaviour/signatures can be detected as early as possible.

Drift detection of "benign" traffic is used to minimise or at least reduce the incidence of false positives in the classification. The benign traffic is simply known prior data (either from test data or the generative component). The drift of benign traffic data is detected by comparing the pre-trained benign data and currently observed benign traffic data. There is a time difference between the generation of the benign traffic training data (which is used for training the Al model) and the observed data (the inference data captured for analysis in an operational environment), and any changes observed over this time period are referred to as drift. If the drift rate is higher than a specified threshold then the re-training of the model is triggered to ensure that the model's false positives are reduced to provide an efficient model. The changes in the benign traffic data also indicate the "new normal" for the operational environment. The benign data drift can also be detected using the critic-based autoencoder approach, via reconstruction error. In this case the conditions entered by the user are characteristic of benign data.

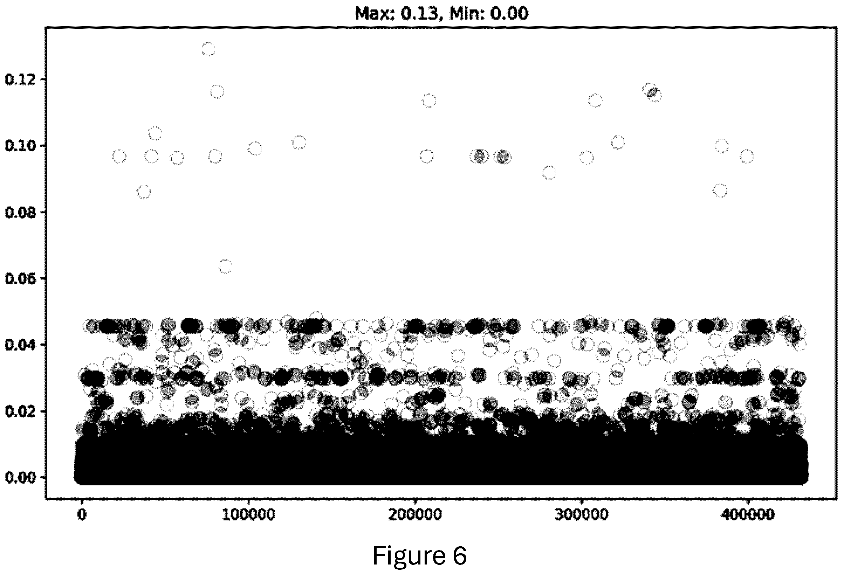

Figure 6 shows the reconstruction error for the reconstruction of a specific type of target threat and since the autoencoder has been bound to learn this specific variant of threat when the threat evolves and new behaviour is formed, the reconstruction error would be higher than 0.04. It can be seen from Figure 6 that there are a few data points (between 0.04 and 0.13) of a potential new variant or anomaly or a new type of threat that behaves slightly similar to the known threat.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above-described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A real-time machine learning, ML, model updating method comprising:
monitoring input data to a deployed ML model;
detecting drift of the input data over time;
identifying new patterns in the input data; and
responsive to detected drift, retraining the ML model using the identified new patterns.

2. The method according to claim 1, wherein the drift is detected and/or the new patterns are identified using an autoencoder in combination with a critic network.

3. The method according to claim 2, wherein the step of identifying new patterns in the input data comprises determining a reconstruction error metric for newly received input data using the autoencoder and critic network.

4. The method according to claim 2 or claim 3, wherein the autoencoder and the critic network are trained in parallel on the same input data, with respective different training goals of: minimising a difference between input data and reconstructed output data of the autoencoder; and optimising the critic network for distinguishing between input data and reconstructed output data.

5. The method according to any one of claims 2 to 4, wherein the autoencoder and the critic network are trained exclusively on target threat data.

6. The method according to any preceding claim, comprising monitoring the performance of the **ML** model on the input data, and correlating a deterioration in performance of the ML model to the detected drift and/or new patterns in the input data.

7. The method according to any preceding claim, wherein the retraining is triggered when an amount and/or rate of detected drift exceeds one or more thresholds.

8. The method according to claim 7, wherein the thresholds comprise one or more of a rate of change in the performance of the model, changes in the signatures of known threats, and a ratio of newly observed drift data to expected data.

9. The method according to any preceding claim comprising using a generative artificial intelligence, Al, algorithm to produce synthetic data from the identified new data patterns, wherein the ML model is retrained using both the identified new data patterns and the synthetic data.

10. The method according to claim 9, wherein the generative Al algorithm is a conditional algorithm which generates the synthetic data in dependence on specified input conditions.

11. The method according to any preceding claim, wherein the retraining is a partial retraining using the identified new data and previous learnings of the ML model.

12. The method according to any preceding claim, comprising validating the retrained model using synthetic data produced from the identified new patterns.

13. The method according to any preceding claim, wherein the ML model is deployed in a cyber-threat detection application operating on a computer network, wherein the input data comprises network metadata, and wherein the new patterns are indicative of new network threats.

14. A real-time machine learning, ML, model updating system comprising:
a drift detector, for monitoring input data to a deployed ML model and detecting drift of the input data over time, and for identifying new patterns in the input data; and
a re-trainer to retrain the ML model, responsive to detected drift, using the identified new patterns.

15. A computer program comprising instructions which, when executed by a computer, cause the computer to carry out the method of any one of claims 1 to 13.
